# EUROPÄISCHE PATENTSCHRIFT

(11) **EP 1 837 227 B1**
(45) Veröffentlichungstag und Bekanntmachung des Hinweises auf die Patenterteilung: **10.04.2013**
(21) Anmeldenummer: 07003830.2
(22) Anmeldetag: 24.02.2007
(51) Int. Cl.: B60K 35/00, B60K 37/06

(54) **Bedienelement für ein Kraftfahrzeug**
Operating component for a motor vehicle
Elément de commande pour véhicule automobile

(30) Priorität: 24.03.2006 DE 102006013645
(43) Veröffentlichungstag der Anmeldung: 26.09.2007
(73) Patentinhaber: Volkswagen Aktiengesellschaft, 38440 Wolfsburg (DE)
(72) Erfinder: Dietz, Jan-Peter, 38440 Wolfsburg (DE); Held, Daniel, 04159 Leipzig (DE)

(56) Entgegenhaltungen:
- WO-A-01/94156
- DE-A1- 10 061 039
- DE-A1- 10 147 940
- DE-A1-102004 033 480
- DE-C1- 19 653 595

## Beschreibung

Die Erfindung betrifft ein Kraftfahrzeug mit einem Bedienelement zur Bedienung einer Funktion des Kraftfahrzeuges.

Mit zunehmenden Funktionalitäten eines Kraftfahrzeuges stellt sich die Aufgabe, Anzeigen und Bedienelemente für verschiedene Funktionen so zu gestalten, dass diese für einen Fahrer eines Kraftfahrzeuges besonders einfach zu erkennen bzw. zu bedienen sind.

Aus dem Stand der Technik sind verschiedene Lösungen dieses Problems bekannt. So ist z.B. gemäß der WO 00/21795 vorgesehen, ein Display- oder Anzeigefeld mehrteilig auszubilden, wobei ein Teil des Anzeigefeldes ein Informations-Panel darstellt, auf welchem Informationen des ausgewählten Menüs bzw. der ausgewählten Funktion sowie gegebenenfalls wichtige Informationen anderer Funktionsgruppen wiedergegeben werden. Auf dem restlichen Teil des Anzeigefeldes werden Funktions- und/oder Statusanzeigen sinnfällig derart generiert, dass sie jeweils einem Bedienelement zugewiesen sind und zwar vorzugsweise dem Bedienelement, dem in diesem Auswahlmenü die jeweilige Funktion zur Bedienung zugewiesen ist.

Gemäß der DE.101 39 693 A1 sind bei modernen elektronischen Einrichtungen im Fahrzeug, die ständig zusätzliche Funktionen mit immer mehr Optionen anböten, wegen der Begrenzung des Bauraumes für die dazugehörigen Bedienelemente Multifunktions-Bedienelemente geschaffen worden, mittels derer verschiedene Funktionen der angeschlossenen Einrichtungen bedienbar sind. So ist beispielsweise aus der EP 0 366 132 B1 eine Multifunktions-Bedieneinrichtung für Kraftfahrzeuge bekannt, bei der die Auswahl von Funktionsgruppen (MENÜS) und die Auswahl individueller Funktionen mittels eines Drehschalters erfolgt, und bei der eine ENTER-Funktion auslösbar ist, wobei ein und derselbe bidirektionale Drehschalter zur Menü-Auswahl und individuellen Funktionsauswahl dient. Dieser Drehschalter weist dabei Raststellungen auf, denen Menüs oder einzelne Funktionen zugeordnet sind, wobei die ENTER-Funktion durch eine Axialbewegung des Drehschalters auslösbar ist. Es dient eine solche Multifunktions-Bedieneinrichtung beispielsweise zur Zieleingabe eines Navigationssystems. Es wird hierzu auf einer Anzeigeeinheit eine alphanumerische Tastatur abgebildet, in der sich der Benutzer mittels der bidirektionalen Bewegung des Drehschalters vor- und zurückbewegen kann. Wenn dann der Cursor sich auf dem gewünschten alphanumerischen Zeichen befindet, kann dieses durch eine Axialbewegung des Drehschalters ausgewählt und in das Navigationssystem übernommen werden.

Die DE 10 2004 037 644 offenbart die Verwendung von Touchscreens zur Bedienung eines Kraftfahrzeuges.

WO 01/94156 offenbart ein Kraftfahrzeug mit einem Bedienelement nach dem Oberbegriff des Anspruchs 1 bzw. ein Verfahren nach dem Oberbegriff des Anspruchs 6.

Es ist Aufgabe der Erfindung, die Bedienung eines Kraftfahrzeuges zu verbessern. Dabei soll das Kraftfahrzeug für einen Fahrer eines Kraftfahrzeuges besonders einfach zu bedienen sein.

Vorgenannte Aufgabe wird durch ein Kraftfahrzeug mit den Merkmalen des Anspruchs 1 bzw durch ein Verfahren mit den Merkmalen des Anspruchs 6 gelöst.

Eine Berührung des Bedienelementes ist im Sinne der Erfindung insbesondere eine leichte Berührung. Es kann jedoch auch vorgesehen sein, dass eine Berührung des Bedienelementes im Sinne der Erfindung ein leichtes Drücken auf das Bedienelement umfasst oder ist, wobei dieses leichte Drücken nicht zur Bedienung des Bedienelementes ausreicht.

Eine Darstellung des Bedienelementes auf der Anzeigevorrichtung ist im Sinne der Erfindung eine Darstellung des Bedienelementes, die ein wieder erkennen des Bedienelementes ermöglicht. Dabei ist eine besonders getreue Darstellung des Bedienelementes vorteilhaft.

Eine Veränderung der Darstellung des Bedienelementes durch eine optische Hervorhebung z.B. kann durch Blinken oder eine farbliche Veränderung und/oder einer Intensitätsveränderung der Darstellung des Bedienelementes erfolgen.

Die Anzeigevorrichtung ist insbesondere dann im Sinne der Erfindung räumlich von dem Bedienelement getrennt, wenn der Abstand zwischen der Anzeigevorrichtung und dem Bedienelement zumindest 20cm beträgt.

Eine Anzeigevorrichtung ist im Sinne der Erfindung insbesondere ein Display zur variablen Darstellung von. Informationen. Ein geeignetes Display ist z.B. ein TFT.

In vorteilhafter Ausgestaltung der Erfindung ist der Sensor datentechnisch mit der Anzeigesteuerung verbunden.

In weiterhin vorteilhafter Ausgestaltung der Erfindung ist eine Hinweisinformation auf das Bedienelement bei Annäherung an das Bedienelement und/oder bei Berührung des Bedienelementes mittels der Anzeigesteuerung auf der Anzeigevorrichtung darstellbar. Eine derartige Hinweisinformation kann z.B. ein Pfeil oder eine Darstellung eines Fingers oder eines Fingerabdrucks sein. Die Hinweisinformation kann auf die Darstellung des Bedienelementes zeigen oder diese ganz oder teilweise überdecken.

In weiterhin vorteilhafter Ausgestaltung der Erfindung ist oder umfasst die Anzeigevorrichtung ein Kombiinstrument. Es kann jedoch auch vorgesehen sein, dass die Anzeigevorrichtung ein in das Lenkrad integriertes Display oder ein fahrseitiges Head-Up-Display (in der Windschutzscheibe) ist oder umfasst.

In weiterhin vorteilhafter Ausgestaltung der Erfindung ist die Geschwindigkeit des Kraftfahrzeuges mittels der Anzeigevorrichtung anzeigbar. Es kann vorgesehen sein, dass weitere den Betrieb des Kraftfahrzeuges betreffende Informationen mittels der Anzeigevorrichtung darstellbar sind. Den Betrieb des Kraftfahrzeuges betreffende Informationen in diesem Sinne kann z.B. die Drehzahl eines Motors des Kraftfahrzeuges, die Temperatur eines Motors des Kraftfahrzeuges, die Tankfüllung, Ausgaben eines Navigationssystems, Ausgaben eines Telefons, Ausgaben einer Musikanlage, Ausgaben eines Infotainmentsystems oder Ausgaben einer Klimaanlage sein.

Vorgenannte Aufgabe wird zudem durch ein Verfahren zum Betrieb eines - insbesondere eines oder mehrere der vorgenannten Merkmale umfassenden - Kraftfahrzeuges mit einem Bedienelement zur Bedienung einer Funktion des Kraftfahrzeuges, mit einem Lenkrad zum Lenken des Kraftfahrzeuges und mit einer in dem oder hinter dem Lenkrad angeordneten Anzeigevorrichtung gelöst, wobei die Anzeigevorrichtung räumlich von dem Bedienelement getrennt ist,
- wobei das Bedienelement mittels der Anzeigevorrichtung dargestellt wird, wobei eine Annäherung an das Bedienelement und/oder eine Berührung des Bedienelementes mittels der Anzeigevorrichtung angezeigt wird, oder
- wobei das Bedienelement (nur) bei Erkennen einer Annäherung an das Bedienelement und/oder einer Berührung des Bedienelementes mittels der Anzeigevorrichtung dargestellt wird.

In weiterhin vorteilhafter Ausgestaltung der Erfindung wird die Darstellung des Bedienelementes bei Annäherung an das Bedienelement und/oder bei Berührung des Bedienelementes, insbesondere durch eine optische Hervorhebung, z.B. durch Blinken oder eine farbliche Veränderung der Darstellung des Bedienelementes, verändert.

In weiterhin vorteilhafter Ausgestaltung der Erfindung wird bei Annäherung an das Bedienelement und/oder bei Berührung des Bedienelementes mittels der Anzeigevorrichtung eine Hinweisinformation auf das Bedienelement, z.B. ein Pfeil oder eine Darstellung eines Fingers oder eines Fingerabdrucks, dargestellt.

In weiterhin vorteilhafter Ausgestaltung der Erfindung wird die Geschwindigkeit des Kraftfahrzeuges mittels der Anzeigevorrichtung gleichzeitig mit der Darstellung des Bedienelementes angezeigt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: einen Ausschnitt eines Kraftfahrzeuges in einer Innenansicht,
- Fig. 2: eine schematische Darstellung einer datentechnischen Verbindung von in einer Mittelkonsole angeordneten Bedienelementen mit einer Anzeigevorrichtung,
- Fig. 3: eine schematische Darstellung eines Schalters und
- Fig. 4: eine Anzeigevorrichtung.

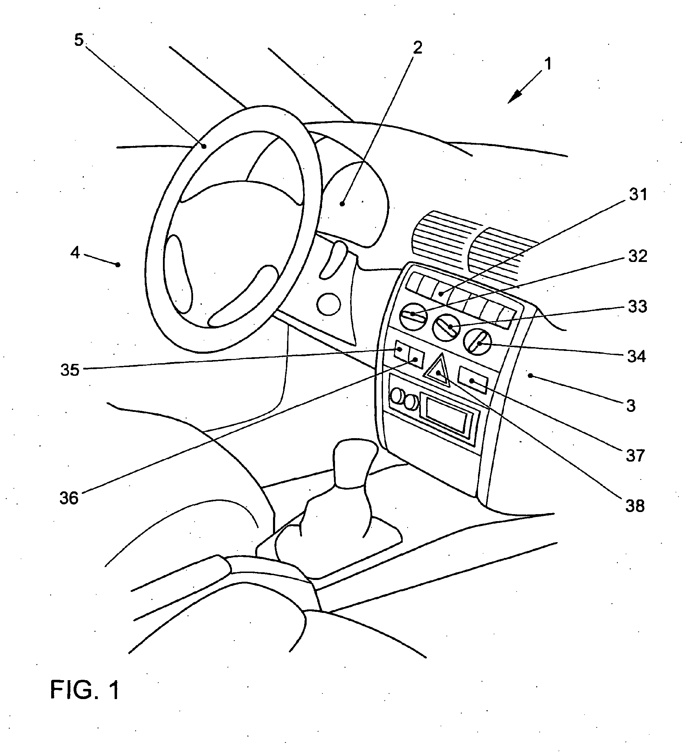

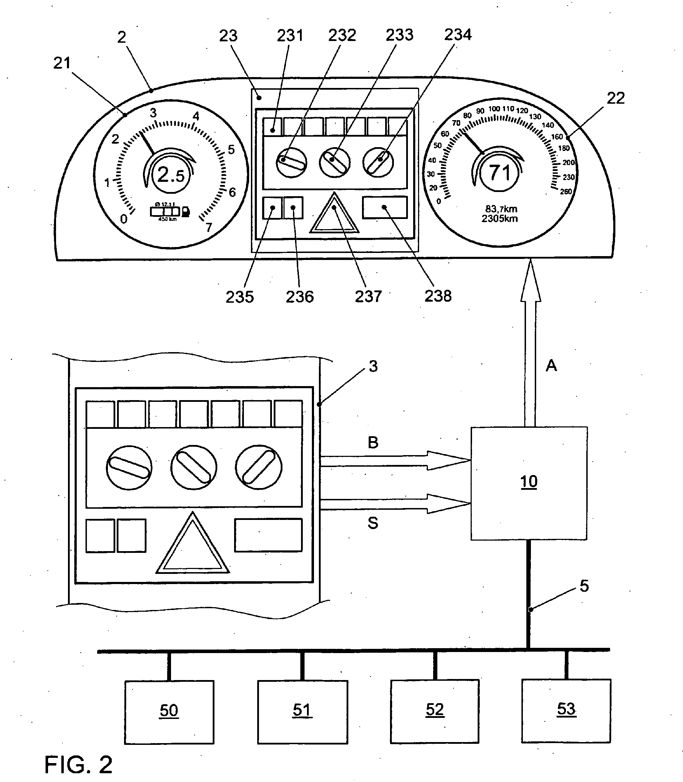

Fig. 1 zeigt einen Ausschnitt eines Kraftfahrzeuges 1 in einer Innenansicht. Dabei bezeichnet Bezugszeichen 4 eine Tür, und Bezugszeichen 3 bezeichnet eine Mittelkonsole. In die Mittelkonsole 3 sind Tasten 31, Drehschalter 32, 33, 34, Schalter 35, 36, 37 sowie ein Bedienknopf 38 für eine Warnblinkanlage integriert. Bezugszeichen 2 bezeichnet ein hinter einem Lenkrad 5 angeordnetes Kombiinstrument. Das Kombiinstrument 2 umfasst - wie in Fig. 2 dargestellt - ein Rundinstrument 21 zur Anzeige der Drehzahl eines Motors des Kraftfahrzeuges 1 sowie ein Rundinstrument 22 zur Anzeige der Geschwindigkeit des Kraftfahrzeuges 1. Das Kombiinstrument 2 umfasst zudem ein zwischen dem Rundinstrumenten 21 und 22 angeordnetes Display 23 zur variablen Darstellung von Informationen. Ein geeignetes Display 23 ist z.B. ein TFT.

Das Kraftfahrzeug 1 umfasst weiterhin eine Anzeigesteuerung 10 zur Steuerung des Kombiinstrumentes 2 mittels eines Anzeigesteuersignals A. Die Anzeigesteuerung 10 ist datentechnisch über ein Bussystem 55 mit einer Motorsteuerung 50 verbunden. Von der Motorsteuerung 50 liest die Anzeigesteuerung 10 Werte für die Drehzahl des Motors des Kraftfahrzeuges 1 und der Geschwindigkeit des Kraftfahrzeuges 1 ein und steuert die Rundinstrumente 21 und 22 entsprechend an. Darüber hinaus werden mittels der Anzeigesteuerung 10 Darstellungen 231 der Tasten 31, Darstellungen 232, 233, 234 der Drehschalter 32, 33, 34, Darstellungen 235, 236, 237 der Schalter 35, 36, 37 und eine Darstellung 238 des Bedienknopfes 38 für die Warnblinkanlage auf dem Display 23 erzeugt. Die Darstellung der Bedienelemente erfolgt dabei derart, dass ein wieder erkennen der Bedienelemente möglich ist. Dabei ist eine besonders getreue Darstellung der Bedienelemente vorteilhaft.

Die Anzeigesteuerung 10 ist datentechnisch mit den in der Mittelkonsole 3 integrierten Bedienelementen, wie den Tasten 31, den Drehschaltern 32, 33, 34, den Schaltern 35, 36, 37 sowie dem Bedienknopf 38 für die Warnblinkanlage verbunden. Dies ist in Fig. 2 symbolisch durch ein mit Bezugszeichen S bezeichnetes Steuersignal dargestellt, das der Anzeigesteuerung 10 anzeigt, welches Bedienelement bedient worden ist. Es kann vorgesehen sein, dass mittels einiger (oder ggf. auch aller) Bedienelemente in der Mittelkonsole 3 mittels des Bussystems mit der Anzeigesteuerung 10 verbundene Funktionsbaugruppen 51, 52, 53 des Kraftfahrzeuges bedient werden. Eine solche Funktionsbaugruppe 51, 52, 53 kann z.B. eine Klimaanlage oder ein Infotainmentsystem sein. Die Anzeigesteuerung 10, die Bedienelemente oder ein Teil der Bedienelemente, sowie das Kombiinstrument 2 oder das Display 23 sind vorteilhafterweise entsprechend einer in der DE 10 2004 013 629 A1 und der DE 10 2004 013 630 A1 offenbarten Systemarchitektur implementiert. Es kann auch vorgesehen sein, dass mittels einiger (oder ggf. auch aller) Bedienelemente eine von der Anzeigesteuerung 10 unabhängige Bedienung erfolgt.

Nähert sich ein Bediener einem der in der Mittelkonsole 3 integrierten Bedienelementen, wie den Tasten 31, den Drehschaltern 32, 33, 34, den Schaltern 35, 36, 37 sowie dem Bedienknopf 38 für die Warnblinkanlage, wird diese Annäherung an das entsprechende Bedienelement mittels des Displays 23 angezeigt. Vorteilhafterweise ist jedoch vorgesehen, dass lediglich eine Berührung des entsprechenden Bedienelementes mittels des Displays 23 angezeigt wird. Eine Berührung des Bedienelementes ist dabei insbesondere eine leichte Berührung. Es kann jedoch auch vorgesehen sein, dass eine Berührung des Bedienelementes ein leichtes Drücken auf das Bedienelement umfasst oder ist, wobei dieses leichte Drücken (noch) nicht zur Bedienung des Bedienelementes ausreicht.

Im vorliegenden Ausführungsbeispiel ist vorgesehen, dass bei Erkennen einer Annäherung an das Bedienelement und/oder einer Berührung des Bedienelementes mittels des Displays 23 eine Veränderung der Darstellung des Bedienelementes erfolgt. Eine derartige Veränderung der Darstellung des Bedienelementes kann insbesondere durch eine optische Hervorhebung z.B. durch Blinken oder eine farbliche Veränderung und/oder eine Intensitätsveränderung der Darstellung des Bedienelementes erfolgen. Dazu wird von dem Bedienelement ein entsprechendes Steuersignal B an die Anzeigesteuerung 10 gesendet, die wiederum das Display 23 entsprechend ansteuert.

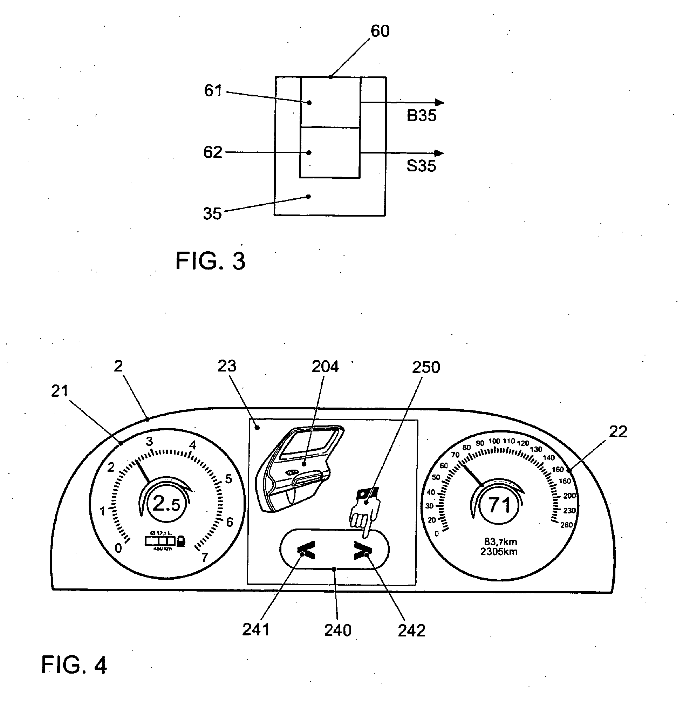

Fig. 3 zeigt eine schematische Darstellung des als Druckschalters ausgestalteten Schalters 35. Der Schalter 35 umfasst einen Sensor 61 zum Erkennen einer Berührung des Schalters 35 an einer Berührfläche 60 (oder alternativ oder zusätzlich zum Erkennen einer Annäherung an den Schalter 35). Wird eine Berührung des Schalters 35 an einer Berührfläche 60 erkannt, so sendet der Sensor 61 ein entsprechendes Steuersignal B35 an die Anzeigesteuerung 10, die wiederum das Display 23 derart ansteuert, dass die Darstellung 235 des Schalters 35 optisch hervorgehoben wird.

Bezugszeichen 62 bezeichnet eine Bedienerkennung. Mittels der Bedienerkennung 62 wird erkannt, ob der Schalter 35 bedient wird. Wird der Schalter 35 (durch entsprechend starkes Drücken auf die Berührfläche 60) bedient, so sendet die Bedienerkennung 62 ein entsprechendes Steuersignal S35 an die Anzeigesteuerung 10, die wiederum eine entsprechende Information an eine entsprechende Funktionsbaugruppe 51, 52 bzw. 53 weiterleitet.

Das beschriebene Ausführungsbeispiel kann auf die in der Mittelkonsole 3 integrierten Bedienelemente, wie die Tasten 31, die Drehschalter 32, 33, 34, die Schalter 35, 36, 37 sowie den Bedienknopf 38 für die Warnblinkanlage, beschränkt sein. Alternativ oder zusätzlich kann vorgesehen sein, dass mit in die Tür 4 integrierten Bedienelementen analog verfahren wird. Ein entsprechendes Ausführungsbeispiel zeigt Fig. 4. Dabei wird bei Erkennen einer Annäherung an einen Fensterheber und/oder einer Berührung des Fensterhebers auf dem Display 23 eine Darstellung 240 des Fensterhebers sowie eine Darstellung 204 der mittels des Fensterhebers bedienbaren Tür 4 abgebildet. In Fig. 4 bezeichnet Bezugszeichen 241 eine Markierung, die eine Drückposition zum Herunterfahren eines Fensters anzeigt, und Bezugszeichen 242 eine Markierung, die eine Drückposition zum Herauffahren des Fensters, anzeigt. Bei Erkennen einer Annäherung an den Fensterheber im Bereich der Markierung 242 und/oder einer Berührung des Fensterhebers im Bereich der Markierung 242 wird auf dem Display 23 eine Hinweisinformation auf die Markierung 242, z.B. ein Pfeil, eine Darstellung eines Fingerabdrucks oder - wie in Fig. 4 gezeigt - eine Darstellung 250 eines Fingers, abgebildet.

Alternativ oder zusätzlich zu der Anordnung des Displays 23 in dem Kombiinstrument 2 kann vorgesehen sein, dass ein Display mit gleicher Aufgabe in das Lenkrad integriert ist und/oder als ein fahrseitiges Head-Up-Display (in der Windschutzscheibe) ausgestaltet ist.

Die Elemente in den Figuren 2 bis 4 sind unter Berücksichtigung von Einfachheit und Klarheit und nicht notwendigerweise maßstabsgetreu gezeichnet. So sind z.B. die Größenordnungen einiger Elemente deutlich übertrieben gegenüber anderen Elementen dargestellt, um das Verständnis der Ausführungsbeispiele der vorliegenden Erfindung zu verbessern.

### Bezugszeichenliste

- 1: Kraftfahrzeug
- 2: Kombiinstrument
- 3: Mittelkonsole
- 4: Tür
- 5: Lenkrad
- 10: Anzeigesteuerung
- 21: Rundinstrument zur Anzeige der Drehzahl eines Motors eines Kraftfahrzeuges
- 22: Rundinstrument zur Anzeige der Geschwindigkeit eines Kraftfahrzeuges
- 23: Display
- 31: Tasten
- 32, 33, 34: Drehschalter
- 35, 36, 37: Schalter
- 38: Bedienknopf für eine Warnblinkanlage
- 50: Motorsteuerung
- 51, 52, 53: Funktionsbaugruppe
- 55: Bussystem
- 60: Berührfläche
- 61: Sensor
- 62: Bedienerkennung
- 204: Darstellung einer Tür
- 231: Darstellung von Tasten
- 232, 233, 234: Darstellung von Drehschaltern
- 235, 236, 237: Darstellung von Schaltern
- 238: Darstellung eines Bedienknopfes für eine Warnblinkanlage
- 240: Darstellung eines Fensterhebers
- 241, 242: Markierung
- 250: Darstellung eines Fingers

- A: Anzeigesteuersignal
- B, B35, S, S35: Steuersignal

## Patentansprüche

1. Kraftfahrzeug (1) mit einem Bedienelement (35) zur Bedienung einer Funktion des Kraftfahrzeuges (1), mit einem Lenkrad (5) zum Lenken des Kraftfahrzeuges (1) und mit einer in dem oder hinter dem Lenkrad (5) angeordneten Anzeigevorrichtung (2), wobei die Anzeigevorrichtung (2) räumlich von dem Bedienelement (35) getrennt ist und das Kraftfahrzeug (1) einen dem Bedienelement (35) zugeordneten Sensor (61) zum Erkennen einer Annäherung an das Bedienelement (35) oder einer Berührung des Bedienelementes (35) sowie eine Anzeigesteuerung (10) zur Darstellung (235) des Bedienelementes (35) auf der Anzeigevorrichtung (2) umfasst, **dadurch gekennzeichnet,**
**dass** die Darstellung (235) des Bedienelementes (35) bei Annäherung an das Bedienelement (35) oder bei Berührung des Bedienelementes (35) mittels der Anzeigesteuerung (10) durch eine optische Hervorhebung veränderbar ist.

2. Kraftfahrzeug (1) nach Anspruch 1, **dadurch gekennzeichnet, dass** der Sensor (61) datentechnisch mit der Anzeigesteuerung (10) verbunden ist.

3. Kraftfahrzeug (1) nach Anspruch 1 oder 2, **dadurch gekennzeichnet, dass** bei Annäherung an das Bedienelement (35) oder bei Berührung des Bedienelementes (35) mittels der Anzeigesteuerung (10) auf der Anzeigevorrichtung (2) eine Hinweisinformation auf das Bedienelement (35) darstellbar ist.

4. Kraftfahrzeug (1) nach einem der vorhergehenden Ansprüche, **dadurch gekennzeichnet, dass** die Anzeigevorrichtung (2) ein Kombiinstrument ist oder umfasst.

5. Kraftfahrzeug (1) nach einem der vorhergehenden Ansprüche, **dadurch gekennzeichnet, dass** die Geschwindigkeit des Kraftfahrzeuges (1) mittels der Anzeigevorrichtung (2) anzeigbar ist.

6. Verfahren zum Betrieb eines Kraftfahrzeuges (1), insbesondere nach einem der vorhergehenden Ansprüche, mit einem Bedienelement (35) zur Bedienung einer Funktion des Kraftfahrzeuges (1), mit einem Lenkrad (5) zum Lenken des Kraftfahrzeuges (1) und mit einer in dem oder hinter dem Lenkrad (5) angeordneten Anzeigevorrichtung (2), wobei die Anzeigevorrichtung (2) räumlich von dem Bedienelement (35) getrennt ist und das Bedienelement (35) mittels der Anzeigevorrichtung (2) dargestellt wird, wobei eine Annäherung an das Bedienelement (35) oder eine Berührung des Bedienelementes (35) mittels der Anzeigevorrichtung (2) angezeigt wird,
**dadurch gekennzeichnet,**
**dass** die Darstellung (235) des Bedienelementes (35) bei Annäherung an das Bedienelement (35) oder bei Berührung des Bedienelementes (35) durch eine optische Hervorhebung verändert wird.

7. Verfahren nach Anspruch 6, **dadurch gekennzeichnet, dass** bei Annäherung an das Bedienelement (35) oder bei Berührung des Bedienelementes (35) mittels der Anzeigevorrichtung (2) eine Hinweisinformation auf das Bedienelement (35) dargestellt wird,

8. Verfahren nach einem der Ansprüche 6 oder 7, **dadurch gekennzeichnet, dass** die Geschwindigkeit des Kraftfahrzeuges (1) mittels der Anzeigevorrichtung (2) gleichzeitig mit Darstellung (235) des Bedienelementes (35) angezeigt wird.

## Claims

1. Motor vehicle (1) having an operator control (35) for controlling a function of the motor vehicle (1), having a steering wheel (5) for steering the motor vehicle (1) and having a display device (2) which is arranged in or behind the steering wheel (5), wherein the display device (2) is spatially separated from the operator control (35), and the motor vehicle (1) comprises a sensor (61) which is assigned to the operator control (35) and has the purpose of detecting an approach to the operator control (35) or contact with the operator control (35), and a display controller (10) for the representation (235) of the operator control (35) on the display device (2), **characterized in that** the representation (235) of the operator control (35) when the operator control (35) is approached or when the operator control (35) is contacted can be changed by means of the display controller (10) by visual highlighting.

2. Motor vehicle (1) according to Claim 1, **characterized in that** the sensor (61) is connected by data technology to the display controller (10).

3. Motor vehicle (1) according to Claim 1 or 2, **characterized in that** when the operator control (35) is approached or when the operator control (35) is contacted, message information relating to the operator control (35) can be displayed on the display device (2) by means of the display controller (10).

4. Motor vehicle (1) according to one of the preceding claims, **characterized in that** the display device (2) is or comprises a combination instrument.

5. Motor vehicle (1) according to one of the preceding claims, **characterized in that** the speed of the motor vehicle (1) can be displayed by means of the display device (2).

6. Method for operating a motor vehicle (1), in particular according to one of the preceding claims, having an operator control (35) for controlling a function of the motor vehicle (1), having a steering wheel (5) for steering the motor vehicle (1) and having a display device (2) which is arranged in or behind the steering wheel (5), wherein the display device (2) is spatially separated from the operator control (35), and the operator control (35) is represented by means of the display device (2), wherein an approach to the operator control (35) or contact with the operator control (35) is indicated by means of the display device (2),
**characterized**
**in that**
the representation (235) of the operator control (35) when the operator control (35) is approached or when the operator control (35) is contacted is changed by visual highlighting.

7. Method according to Claim 6, **characterized in that** when the operator control (35) is approached or when the operator control (35) is contacted, message information relating to the operator control (35) is displayed by means of the display device (2).

8. Method according to one of Claims 6 or 7, **characterized in that** the speed of the motor vehicle (1) is displayed by means of the display device (2) at the same time as the representation (235) of the operator control (35).

## Revendications

1. Véhicule automobile (1) comprenant un élément de commande (35) pour la commande d'une fonction du véhicule automobile (1), comprenant un volant de direction (5) pour diriger le véhicule automobile (1) et un dispositif d'affichage (2) disposé dans le volant de direction (5) ou derrière lui, le dispositif d'affichage (2) étant séparé spatialement de l'élément de commande (35) et le véhicule automobile (1) comprenant un capteur (61) associé à l'élément de commande (35) pour détecter un rapprochement de l'élément de commande (35) ou un contact avec l'élément de commande (35) ainsi qu'une commande d'affichage (10) pour illustrer (235) l'élément de commande (35) sur le dispositif d'affichage (2), **caractérisé en ce que** l'illustration (235) de l'élément de commande (35) lors d'un rapprochement de l'élément de commande (35) ou d'un contact avec l'élément de commande (35) peut être modifiée au moyen de la commande d'affichage (10) par une accentuation optique.

2. Véhicule automobile (1) selon la revendication 1, **caractérisé en ce que** le capteur (61) est connecté par une technique de données à la commande d'affichage (10).

3. Véhicule automobile (1) selon la revendication 1 ou 2, **caractérisé en ce que** lors du rapprochement de l'élément de commande (35) ou du contact avec l'élément de commande (35), une information d'avis concernant l'élément de commande (35) peut être illustrée au moyen de la commande d'affichage (10) sur le dispositif d'affichage (2).

4. Véhicule automobile (1) selon l'une quelconque des revendications précédentes, **caractérisé en ce que** le dispositif d'affichage (2) est ou comprend un combiné d'instruments.

5. Véhicule automobile (1) selon l'une quelconque des revendications précédentes, **caractérisé en ce que** la vitesse du véhicule automobile (1) peut être affichée au moyen du dispositif d'affichage (2).

6. Procédé pour faire fonctionner un véhicule automobile (1), en particulier selon l'une quelconque des revendications précédentes, comprenant un élément de commande (35) pour commander une fonction du véhicule automobile (1), avec un volant de direction (5) pour diriger le véhicule automobile (1) et un dispositif d'affichage (2) disposé dans le volant de direction (5) ou derrière lui, le dispositif d'affichage (2) étant séparé spatialement de l'élément de commande (35) et l'élément de commande (35) étant illustré au moyen du dispositif d'affichage (2), un rapprochement de l'élément de commande (35) ou un contact avec l'élément de commande (35) étant affiché au moyen du dispositif d'affichage (2),
**caractérisé en ce que**
l'illustration (235) de l'élément de commande (35) lors du rapprochement de l'élément de commande (35) ou lors du contact avec l'élément de commande (35) est modifiée par une accentuation optique.

7. Procédé selon la revendication 6, **caractérisé en ce que** lors du rapprochement de l'élément de commande (35) ou lors du contact avec l'élément de commande (35), une information d'avis concernant l'élément de commande (35) est illustrée au moyen du dispositif d'affichage (2).

8. Procédé selon l'une quelconque des revendications 6 ou 7, **caractérisé en ce que** la vitesse du véhicule automobile (1) est affichée au moyen du dispositif d'affichage (2) en même temps que l'illustration (235) de l'élément de commande (35).
